# EUROPÄISCHE PATENTSCHRIFT

(11) **EP 0 832 594 B1**
(45) Veröffentlichungstag und Bekanntmachung des Hinweises auf die Patenterteilung: **12.07.2000**
(21) Anmeldenummer: 97114812.7
(22) Anmeldetag: 27.08.1997
(51) Int. Cl.: A47J 43/046

(54) **Küchenmaschine**
Food processor
Robot menager

(30) Priorität: 26.09.1996 DE 19639582
(43) Veröffentlichungstag der Anmeldung: 01.04.1998
(73) Patentinhaber: Braun GmbH, Kronberg (DE)
(72) Erfinder: Börger, Georg, 61449 Steinbach (DE); Hackel-Ripsam, Simone, 67117 Limburgerhof (DE); Kamprath, Karl-Heinz, 65207 Wiesbaden (DE)

(56) Entgegenhaltungen:
- WO-A-95/20903
- WO-A-96/25081
- DE-A- 3 933 036
- GB-A- 2 082 713

## Beschreibung

Die vorliegende Erfindung bezieht sich auf eine Küchenmaschine mit einer Grundeinheit, die mindestens zwei getrennte Aufnahmen für jeweils einen Arbeitsbehälter aufweist, wobei möglicherweise im Bereich der Aufnahmen jeweils ein Antriebsteil angeordnet ist, das in antriebsmäßiger Verbindung mit einem elektrischen Motor stehen, und mit jeweils einer jeder Aufnahme zugeordneten Behälter-Verriegelungseinrichtung, wie im ersten Teil der Anspruchs 1 definiert ist.

Küchenmaschinen werden für unterschiedliche Aufgaben bei der Küchenarbeit eingesetzt. Hierzu zählen u. a. Kneten, Rühren und Schlagen, wozu üblicherweise große Rührschüsseln eingesetzt werden, in denen sich ein entsprechendes Werkzeug, beispielsweise ein Knetwerkzeug, ein Rührbesen oder ein Schlagbesen, dreht. Ein weiterer Arbeitsbereich solcher Küchenmaschinen ist das Schneiden, Raspeln, Reiben und Mischen mit entsprechenden Werkzeugen, die solche Zerkleinerungs- und Mischfunktionen ausführen. Für diesen Arbeitsbereich wird die Küchenmaschine mit einer Behältereinheit, die ein gegenüber einer Rührschüssel kleineres Fassungsvermögen aufweist, ausgestattet. Schließlich ist ein drittes Einsatzgebiet solcher Küchenmaschinen das Mixen, allerdings auch Hacken und Zerkleinern, wozu auf das Küchengerät ein dazu angepaßter Behälter aufgesetzt wird.

Ein Küchengerät, wie es vorstehend beschrieben ist, ist beispielsweise aus der DE-C2 31 26 956 bekannt.

Üblicherweise werden die einzelnen Arbeitsbehälter auf eine von dem Grundgehäuse vorstehende Antriebskupplung oder Antriebsspindel, die zu einer den Behälter aufnehmenden Aufnahme-Mulde zentriert ist, aufgesetzt. Diese Antriebsspindel greift dann in ein entsprechendes Nabenteil am Boden des Behälters ein, das sich in den Behälter hinein erstreckt und das jeweilige Werkzeug in dem Behälter antreibt.

Um Küchengeräte noch flexibler einsetzen zu können, ist man dazu übergegangen, solche Küchenmaschinen mit zwei Arbeitsbehälter-Aufnahmen, denen jeweils eine gesonderte Antriebsspindel zugeordnet ist, auszustatten. Auf diese zwei Antriebsspindeln wird dann ein dazu zugeordneter Arbeitsbehälter eingesetzt. Die beiden Antriebsspindeln können über einen einzelnen, in dem Grundgehäuse angeordneten Motor unter unterschiedlichen Umdrehungszahlen aufgrund unterschiedlicher Übersetzungsverhältnisse zwischen der Antriebswelle des Motors und der jeweiligen Antriebsspindel angetrieben werden.

Aus Sicherheitsgründen werden die Arbeitsbehälter solcher Küchenmaschinen an der vorgesehenen Stelle in der Grundeinheit verriegelt, um eine sichere Antriebsverbindung zwischen dem Arbeitsbehälter und der Grundeinheit zu schaffen und um sicherzustellen, daß während des Betriebs, gerade dann, wenn eine gewisse Unwucht in dem Behälter aufgrund einer ungleichen Verteilung der zu bearbeitenden Nahrungsmittel auftritt, der Arbeitsbehälter fest mit der Grundeinheit verbunden verbleibt.

Aus Sicherheitserwägungen sollte es bei solchen Arbeitsgeräten, die mehrere Aufnahmen für mehrere Arbeitsbehälter besitzen, nicht möglich sein, mehrere Arbeitsbehälter gleichzeitig an dem Gerät so zu befestigen, daß eine antriebsmäßige Verbindung zwischen mehreren Arbeitsbehältern mit dem Gerät gegeben ist.

Ausgehend von den vorstehend geschilderten Küchenmaschinen, die mindestens zwei getrennte Aufnahmen für jeweils einen Arbeitsbehälter aufweisen, liegt der vorliegenden Erfindung die Aufgabe zugrunde, eine solche Küchenmaschine mit einer Sicherheitseinrichtung auszustatten, die die Möglichkeit eines gleichzeitigen antriebsmäßigen Verbindens mehrerer Arbeitsbehälter auf mehreren Antriebsspindeln unterbindet, wobei eine solche Sicherheitseinrichtung einfach und störunanfällig aufgebaut sein soll.

Diese Aufgabe wird, ausgehend von dem eingangs angegebenen Stand der Technik, dadurch gelöst, daß ein Sicherheitsteil vorgesehen ist, wobei das Sicherheitsteil zwischen mindestens zwei Positionen so verstellbar ist, daß in der einen Position die erste Aufnahme für eine benutzungsmäßige Arbeitsbehälteraufnahme gesperrt ist, während die zweite Aufnahme für eine benutzungsmäßige Arbeitsbehälteraufnahme freigegeben ist, und daß in der anderen Position die zweite Aufnahme für eine benutzungsmäßige Arbeitsbehälteraufnahme gesperrt ist, während die erste Aufnahme für eine benutzungsmäßige Arbeitsbehälteraufnahme freigegeben ist, wobei vorzugsweise das Sicherheitsteil zu seiner jeweiligen Sperrposition unter Einsetzen eines Arbeitsbehälters in die Aufnahme durch diesen Arbeitsbehälter verstellt wird.

Das Sicherheitsteil stellt normalerweise ein einfaches, mechanisches Teil dar, das eine Sicherungsfunktion derart übernimmt, daß es die jeweils gerade nicht benutzte Aufnahme sperrt, wenn in die andere Aufnahme benutzungsmäßig ein Arbeitsbehälter eingesetzt ist. Dieses Sicherheitsteil wird folglich durch den jeweiligen Arbeitsbehälter, der in eine der Aufnahmen eingesetzt wird, normalerweise derart bewegt, daß, nach der Verschiebung des Sicherheitsteils, die andere Aufnahme für ein Einsetzen eines Arbeitsbehälters in diese Aufnahme gesperrt ist, so daß es jeweils nur möglich ist, einen einzigen Arbeitsbehälter in einer antriebsmäßigen Verbindung auf seiner Antriebsspindel an dem Küchengerät anzuordnen (Anspruch 2). Sollte versucht werden, einen Arbeitsbehälter an einer Aufnahme anzuordnen, wenn in einer anderen Aufnahme bereits ein Arbeitsbehälter positioniert ist, kann das Sicherheitsteil nicht verschoben werden, da es in seiner Verschiebung durch den bereits an dem Gerät angeordneten Arbeitsbehälter gesperrt wird. Diese Sicherheitseinrichtung wird demzufolge ohne zusätzliche Maßnahmen durch den Benutzer einer solchen Küchenmaschine immer dann betätigt, und zwar unbewußt, wenn ein Arbeitsbehälter an der Küchenmaschine angeordnet wird. Üblicherweise reicht für die Sicherheitseinrichtung ein einzelnes Sicherheitsteil, das zwischen den jeweiligen Positionen verschiebbar angeordnet ist, aus, so daß sich ein äußerst einfacher, aber dennoch funktions- und betriebssicherer Aufbau ergibt. Trotz dieser einfachen Verschiebbarkeit oder Verstellbarkeit des Sicherheitsteils zwischen den jeweiligen Sperrpositionen und Freigabepositionen ergibt sich eine hohe Sicherheit und sichere Funktionsweise auch bei Fehlbedienungsversuchen.

Es wird verständlich werden, daß ein solches Sicherheitsteil, wie es vorstehend beschrieben ist, nicht nur in Küchengeräten mit zwei Arbeitsbehältern eingesetzt werden kann, sondern auch in solchen Geräten, die beispielsweise drei Arbeitsbehälter aufweisen. Hierbei wird das eine Sicherheitsteil, gegebenenfalls auch zwei oder mehr Teile, so in seiner Form ausgelegt und verschiebbar angeordnet, daß dann, wenn in eine der Aufnahmen für einen Arbeitsbehälter ein solcher so eingesetzt wird, daß er eine antriebsmäßige Verbindung zu dem Antriebsmotor des Geräts erhält, die beiden anderen Aufnahmen für die jeweiligen Arbeitsbehälter durch das Sperrteil gesperrt werden. In dieser Sperrposition des Sperrteils ist ein Einsetzen der jeweiligen anderen Behälter so, daß eine antriebsmäßige Verbindung zu einer Antriebsspindel hergestellt wird, nicht möglich.

Es bestehen verschiedene Möglichkeiten, das Sperrteil so in seiner Sperrposition anzuordnen, daß die Herstellung einer Antriebsverbindung eines anderen Arbeitsbehälters mit einer Antriebsspindel verhindert wird. Eine einfache Möglichkeit ergibt sich dann, gemäß Anspruch 3, wenn sich das Sperrteil in den Bereich der Aufnahme hinein, in die der Arbeitsbehälter in die Grundeinheit des Küchengeräts eingesetzt wird, vorsteht. Aufgrund dieses in den Bereich, in den sich der Arbeitsbehälter normalerweise in seiner benutzungsgemäßen Position einsetzt, vorstehenden Teil des Sperrteils ist es nicht möglich, den Arbeitsbehälter ordnungsgemäß zu positionieren und eine Antriebsverbindung zwischen dem Nabenteil des Arbeitsbehälters und der Antriebsspindel herzustellen.

Damit der Arbeitsbehälter nicht mit seinem Nabenteil auf die Antriebsspindel aufsetzbar ist, wird das Sicherheitsteil gemäß Anspruch 4 bevorzugt in seiner Sperrposition so positioniert, daß es sich bei dem Versuch, den Arbeitsbehälter von oben in Richtung Antriebsspindel auf diese aufzusetzen, unterhalb des Bodens des Arbeitsbehälters befindet und demzufolge der Arbeitsbehälter nicht mit seinem Nabenteil auf die Antriebsspindel absenkbar ist.

Eine weitere, bevorzugte Anordnung des Sicherheitsteils so, daß ein Befestigen eines Aufnahmebehälters in der Sperrposition des Sicherheitsteils nicht möglich ist, ist gemäß Anspruch 5 gegeben. Hiernach erstreckt sich das Sicherheitsteil in der Sperrposition in Halte- und/oder Verriegelungsteile an dem Arbeitsbehälter und der Aufnahme am Geräteteil hinein, die normalerweise beim Verriegeln des Arbeitsbehälters in der Aufnahme ineinandergreifen. Das sich in diese Halte- und/oder Verriegelungsteile hinein erstreckende Sperrteil verhindert, daß diese Teile ineinandergreifen können.

Wie bereits vorstehend erwähnt, ist es zu bevorzugen, daß, gemäß Anspruch 6, das Sicherheitsteil zu der Sperrposition beim Einsetzen eines Arbeitsbehälters in seine Aufnahme bewegt wird. Hierdurch sind keine gesonderten Handgriffe durch den Benutzer erforderlich, um das Sperrteil zu verstellen, als diejenigen, die er ohnehin beim Aufsetzen des Arbeitsbehälters auf die entsprechende Aufnahme vornimmt.

Eine einfache Anordnung des Sicherheitsteils ergibt sich nach den Ansprüchen 7 und 8, indem das Sicherheitsteil zwischen den verschiedenen Positionen, d.h. zwischen den jeweiligen Sperr- und Freigabepositionen, linear verstellbar ist. Hierzu kann das Sicherheitsteil auf einem Steg verschiebbar gehalten werden, so daß es in den jeweiligen Endpositionen, auf dem Steg verschoben, die eine Aufnahme oder die andere Aufnahme im Hinblick auf die Möglichkeit eines Einsetzens eines Arbeitsbehälters sperrt. Weiterhin kann die Anordnung durch Positionierung und Führung des Sicherheitsteils auf einem Steg mit einfachen Mitteln sehr stabil ausgeführt werden.

Eine weitere, konstruktiv einfache Möglichkeit einer Anordnung des Sperrteils ergibt sich mit den Maßnahmen nach Anspruch 9, indem das Sicherheitsteil, im Gegensatz zu einer linearen Verschiebung, um eine Achse drehbar gehalten ist. Das Sperrteil kann hierbei eine ovale odere andere Form aufweisen, so daß es unter Drehung mit Kantenbereichen in die relevanten Bereiche an der Aufnahme oder Halte- und/oder Verriegelungsteilen in der Aufnahme vorsteht. Ein solches Sicherheitsteil besitzt die Form einer Nockenscheibe mit jeweiligen Vorsprüngen, die sich durch einen Arbeitsbehälter, der ordnungsgemäß in eine Aufnahme eingesetzt wird, berührt werden, um das Sicherheitsteil zu verstellen.

Um das Sicherheitsteil zu der jeweiligen Sperrposition hin zu verstellen, kann es dienlich sein, an dem Arbeitsbehälter, gemäß Anspruch 10, eine Nockenfläche vorzusehen. Diese Nockenfläche, beispielsweise keilförmig, hintergreift beim Einsetzen eines Arbeitsbehälters in seine Aufnahme das Sicherheitsteil und verschiebt es dann, wenn ein solcher Arbeitsbehälter unter leichtem Drehen in seiner Aufnahme an Halte- und/oder Verriegelungsteilen verriegelt wird. Sollte sich bereits in der anderen Aufnahme ein Arbeitsbehälter benutzungsmäßig angeordnet befinden, so kann das Sperrteil dann nicht weiter verschoben werden, das bedeutet, das Sperrteil befindet sich bereits in einer Sperrposition, die aufgrund des in der anderen Aufnahme eingesetzten Arbeitsbehälters nicht geändert werden kann. Es ist dann nicht möglich, den Arbeitsbehälter unter weiterem Verdrehen in seiner Aufnahme anzuordnen bzw. zu verriegeln. Vorzugsweise wird eine solche Nockenfläche gemäß Anspruch 11 am Außenumfang des unteren Teils des Arbeitsbehälters angeordnet.

Ein solches Sicherheitsteil kann auch für den Benutzer sichtbar auf der Oberseite der Grundeinheit, gemäß Anspruch 12, positioniert werden. Der Benutzer kann so einfach die Funktion des Sperrteils erkennen, so daß er es unterlassen wird zu versuchen, gewaltsam einen Arbeitsbehälter in seiner Aufnahme zu befestigen, wenn sich das Sperrteil in seiner Sperrposition für einen Behälter befindet, da bereits in der anderen Aufnahme ein Arbeitsbehälter angeordnet ist.

Das Sicherheitsteil kann, gemäß Anspruch 13, in seinem Verschiebeweg durch Anschläge begrenzt sein, damit es nur zwischen den jeweiligen relevanten Sperrpositionen verschoben werden kann.

Küchengeräte mit Sicherheitsteile sind aus der DE-A-39 33036, WO-A-96 25 081, GB-A-2 082 713 sowie WO-A-95 20 903 bekannt.

Weiter Einzelheiten und Merkmale der Erfindung ergeben sich aus der nachfolgenden Beschreibung von Ausführungsbeispielen anhand der Zeichnungen. In der Zeichnung zeigt:
- Fig. 1: eine perspektivische Vorderansicht eines Küchengeräts mit einem ordnungsgemäß installierten und verriegelten Arbeitsbehälter und mit einem weiteren Arbeitsbehälter, der durch ein Sicherheitsteil im Hinblick auf eine benutzungsgemäße Anordnung gesperrt wird,
- Fig. 2: eine schematische Vorderansicht der Fig. 1 mit teilweise geschnittenen Arbeitsbehältern,
- Fig. 3: eine Draufsicht auf das Gerät nach Fig. 1,
- Fig. 4: ein Teilschnitt durch die Küchenmaschine im Bereich des Sicherheitsteils entlang der Schnittlinie II-II nach Fig. 3, und
- Fig. 5: eine perspektivische Ansicht auf die Unterseite des Sicherheitsteils in vergrößertem Maßstab.

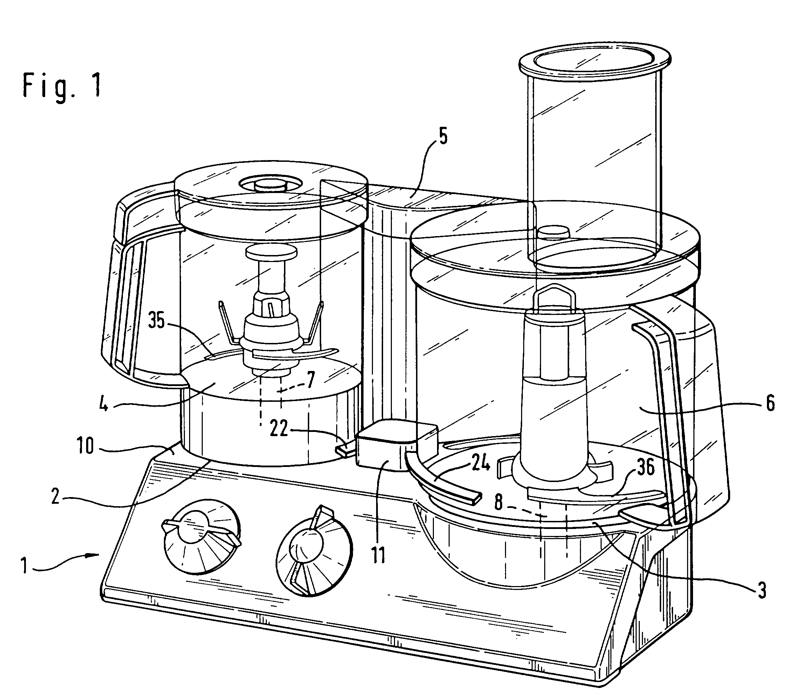

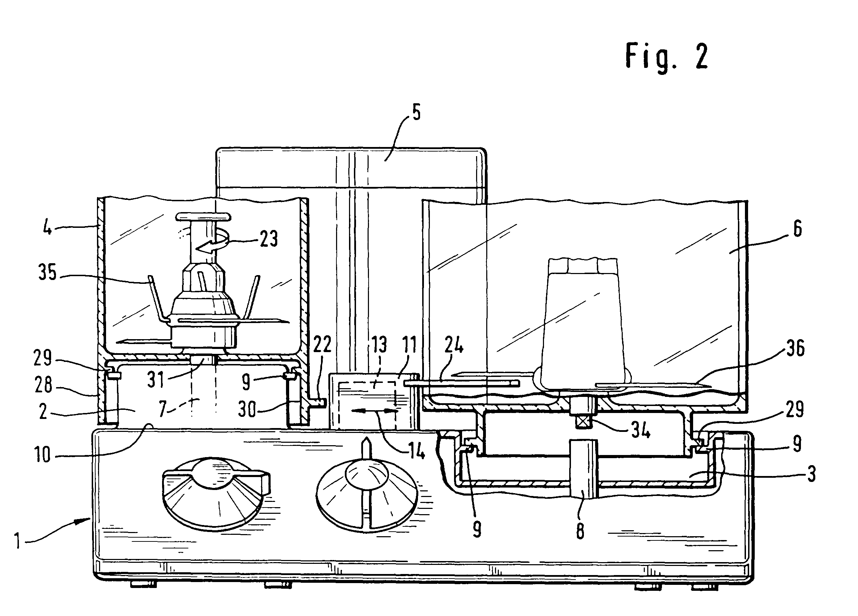

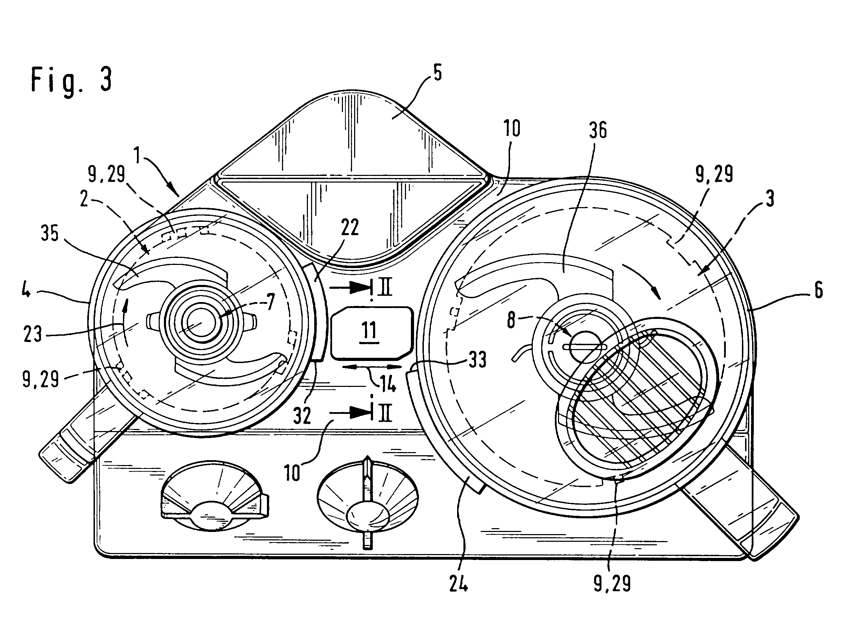

Die Küchenmaschine, wie sie die Figuren 2 und 3 zeigen, weist eine Grundeinheit 1 mit zwei Aufnahmen 2, 3 für jeweils einen Arbeitsbehälter 4, 6 auf. Der im Durchmesser kleinere, linke Arbeitsbehälter 4 dient vorzugsweise zum Mixen von Flüssigkeiten, während der im Durchmesser größere, rechte Arbeitsbehälter 6 vorzugsweise zum Kneten von Teig, Zerhacken, Rühren, etc., von Nahrungsmitteln dient. An dem in Fig. 1 hinteren Gehäusebereich, etwa zwischen den beiden Aufnahmen 2, 3, erstreckt sich von der Grundeinheit ein turmartiges Gehäuseteil 5 nach oben, in dem ein nicht näher gezeigter elektrischer Motor gehalten ist, dessen nicht dargestellte Abtriebswelle mit einer nicht dargestellten Antriebsriemenscheibe in Verbindung steht, die über Riemen mit ebenfalls nicht dargestellten Riemenscheiben, die mit den Antriebsspindeln 7, 8 (siehe Fig. 2 und 3) befestigt sind, in Drehverbindung steht. Unter Drehung des Motors werden die beiden Antriebsspindeln 7, 8, die den jeweiligen Aufnahmen 2 und 3 für die Arbeitsbehälter 4 und 6 zugeordnet sind, auf diese Weise mit unterschiedlichen Drehzahlen gedreht. Die Abtriebswelle des Motors, die Antriebsriemenscheibe, die beiden Riemenscheiben und der Riemen bilden das Getriebe der Küchenmaschine, das unterhalb der Arbeitsbehälter in der Grundeinheit 1 ausgebildet ist.

Jeder der Arbeitsbehälter 4, 6 wird, um Nahrungsmittel zu bearbeiten, auf die ihm zugeordnete Aufnahme 2 oder 3 aufgesetzt und geringfügig gedreht, so daß sich entsprechende Halte- und/oder Verriegelungsteile 9, 29 an den Aufnahmen 2, 3 und den Arbeitsbehältern 4, 6 wie sie in den Figuren 1 und 2 zu sehen sind, verriegeln.

Auf der Gehäuseoberseite 10 der Grundeinheit 1 ist nach den Figuren 1, 2 und 3 in dem Bereich zwischen der Aufnahme 2 und der Aufnahme 3 ein Sicherheitsteil 11 positioniert, das an einem Steg 12 eines Trägers 13, der Teil der Grundeinheit 1 ist, in Richtung des Doppelpfeils 14 (Figuren 2 und 3) verschiebbar gehalten ist. Wie in den Figuren 2 und 3 zu erkennen ist, ist der Steg 12 und somit das Sicherheitsteil 11 in seiner Längserstreckung zu den beiden Antriebsspindeln 7 und 8 bzw. zur Außenfläche der Arbeitsbehälter 4, 6 hin derart ausgerichtet, daß nur einer der beiden Arbeitsbehälter 4, 6 in seine ordnungsgemäße Betriebslage gebracht werden kann, während der andere Arbeitsbehälter durch das Sicherheitsteil 11 beim Einbringen in seine Betriebslage gesperrt wird.

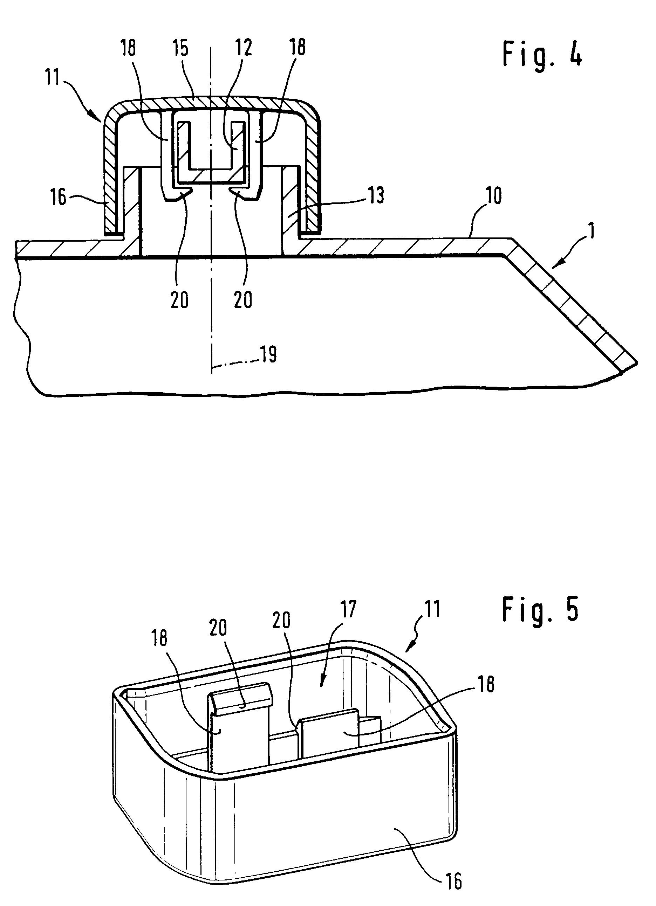

Das Sicherheitsteil 11 besitzt nach Fig. 4 eine obere Abdeckung 15, von der sich nach unten ein umlaufender Rand 16 erstreckt. In dem Innenraum 17, der durch den umlaufenden Rand 16 begrenzt ist, erstrecken sich von der Rückseite der oberen Abdekkung 15 aus zwei Stege 18, die unter gleichem Abstand zu einer Mittellinie 19 des Sicherheitsteils 11 positioniert sind. An dem Ende jedes der Stege 18 ist ein hakenartiger Fortsatz 20 vorhanden, der jeweils zu der Mittellinie 19 hin vorsteht.

Das Sicherheitsteil 11 wird an dem Steg 12 des Trägers 13 so montiert, daß die beiden Stege 18 mit ihren hakenartigen Fortsätzen 20 den Steg 12 umgreifen, so daß das Sicherheitsteil 11 klemmend an dem Steg 12 gehalten ist. Der Steg ist in seiner Längserstreckung kürzer als die Länge des Innenraums 17 des Sicherheitsteil 11 in Richtung der Mittelinie 19, so daß das Sicherheitsteil 11 an dem Steg 12 in Richtung des Doppelpfeils 14 nur bis zu einer linken oder rechten Sperrposition verschoben werden kann.

Wenn sich nun das Sicherheitsteil 11 in der rechten Sperrposition befindet, wie dies in den Figuren 2 und 3 mit durchgezogener Linie dargestellt ist, kann der linke Arbeitsbehälter 4 in die linke Aufnahme 2 aufgesetzt werden, da das Sicherheitsteil 11 die am Arbeitsbehälter 4 ausgebildete Nockenfläche 22 freigibt, so daß ein Drehen und gleichzeitiges Herunterfahren des Arbeitsbehälters 4 an der Aufnahme 2 möglich wird. Hierzu ist an dem Außenumfang des unteren Teils des Arbeitsbehälters 4 die Nockenfläche 22 vorgesehen, die sich radial nach außen erstreckt.

Um den Arbeitsbehälter 4 in der ihm zugeordneten Aufnahme 2 zu verriegeln, wird der Arbeitsbehälter 4 um die Aufnahme 2 von oben in Richtung der Antriebsspindel 7 aufgesetzt und in Richtung des Drehpfeils 23 gedreht, um die entsprechenden Halte- und/oder Verriegelungsteile 29 an der Innenseite 30 des rohrförmigen Ansatzes 28 des Arbeitsbehälters 4 in die entsprechenden Halte- und/oder Verriegelungsteile 9 in der Aufnahme 2 einzurasten, so daß der Arbeitsbehälter 4 fest mit der Grundeinheit 1 verbunden ist. Dabei kuppelt die Antriebsspindel 7 mit der Abtriebswelle 31 des Arbeitsbehälters 4; denn unter dieser Drehung des Arbeitsbehälters 4 in Richtung des Pfeils 23 senkt sich der Behälter 4 nach unten über die Antriebsspindel 7 ab, da die Halte- und/oder Verriegelungsteile 9, 29 eine Art Gewinde darstellen, in das der Arbeitsbehälter 4 eingeschraubt und verriegelt wird.

Mit der Drehung des Arbeitsbehälters in Richtung des Drehpfeils 23 wird die Nockenfläche 22 zu dem Sicherheitsteil 11 hin gedreht, bis die vordere Kante 32 dieser Nokkenfläche 22 an die Außenseite, d.h. an den umlaufenden Rand 16 (Fig. 4), des Sicherheitsteils 11 anstößt und dieses zu der nach rechts gerichteten Position verschiebt (Fig. 3).

Eine solche Verschiebung des Sperrteils 11 in die Position nach rechts ist allerdings nur dann möglich, wenn in der rechten Aufnahme 3 nicht schon bereits der Arbeitsbehälter 6 ordnungsgemäß in seine Betriebslage eingesetzt ist. Falls nämlich ein solcher Arbeitsbehälter 6 in die rechte Aufnahme 3, die - im Gegensatz zu der linken, als Dom ausgebildeten Aufnahme - als Ausnehmung in der Grundeinheit 1 ausgebildet ist, eingesetzt wäre, würde die entsprechende Nockenfläche 24 des Arbeitsbehälters 6 an der rechten Außenseite des Sicherheitsteils 11 anschlagen, so daß eine Verschiebung bzw. Verstellung des Sicherheitsteils 11 nach rechts zur Freigabe des linken Arbeitsbehälters 4 nicht möglich ist. Demzufolge kann der Arbeitsbehälter 4, der an der linken Aufnahme 2 angeordnet werden soll, nicht weiter gedreht werden, da er mit der vorderen Kante 32 der Nockenfläche an das Sicherheitsteil 11 anstößt und dann nicht weiter gedreht werden kann, was aber in der Zeichnung nicht dargestellt ist. Auf diese Art und Weise wird gewährleistet, daß in das Küchengerät mit den zwei Aufnahmen 2, 3, wie es in den Figuren dargestellt ist, jeweils nur ein Arbeitsbehälter 4 in eine benutzungsgemäße Anordnung an der Gehäuseeinheit 1 aufgesetzt werden kann.

In der perspektivischen Darstellung der Fig. 1 ist eine Anordnung der Arbeitsbehälter derart gezeigt, daß der linke Arbeitsbehälter 4, der der linken Aufnahme 2 zugeordnet ist, fest an der Grundeinheit 1 verriegelt ist, während der rechte Arbeitsbehälter 6 eine Positionierung darstellt, in der er noch nicht antriebsmäßig mit der Antriebsspindel 8 verbunden ist, wie dies auch Fig. 3 zeigt. Da der linke Arbeitsbehälter 4 in der Aufnahme 2 ordnungsgemäß installiert ist und somit über seine Nockenfläche 22 das Sicherheitsteil 11 in die nach rechts verschobene Sperrposition verstellt hat, kann der rechte Arbeitsbehälter 6 nicht weiter gedreht werden, da dessen vordere Kante 33 der Nockenfläche 24 an das Sicherheitsteil anschlagen würde. Insofern kann der rechte Arbeitsbehälter 6 nicht in die Halte- und/oder Verriegelungsteile 9 eingedreht werden und sich absenken, so daß auch keine antriebsmäßige Verbindung zwischen der Abtriebswelle 34 des Arbeitsbehälters 6 und der Antriebsspindel 8 der Grundeinheit 1 erfolgen kann.

Wie die Ausführungsform nach den Figuren 2, 3 und 4 zeigt, wird das Sicherheitsteil 11 an dem Steg 12 linear in Richtung des Doppelpfeils 14 verschiebbar geführt. Dies stellt eine sehr einfache, aber dennoch wirkungsvolle, Sicherheitseinrichtung dar, die jeweils verhindert, daß dann, wenn bereits ein Arbeitsbehälter 4 an dem Gerät benutzungsmäßig befestigt ist, ein weiterer Arbeitsbehälter 6 nicht in eine benutzungsmäßige Position und damit in eine Antriebsverbindung mit der anderen Antriebsspindel 8 gebracht werden kann.

Da das Sicherheitsteil 11 an der Gehäuseoberseite 10 des Gehäuseteils 1 zwischen den beiden Aufnahmen 2 und 3 gut sichtbar für den Benutzer positioniert ist, kann der Benutzer jeweils erkennen, daß dann, wenn bereits ein Arbeitsbehälter 4 an dem Gerät angeordnet ist, und zwar aufgrund des verschobenen Verriegelungsteils 11 zu seiner Sperrposition hin, der zweite Behälter 6 nicht zusätzlich in eine antriebsmäßige Verbindung mit der Antriebsspindel 8 angeordnet werden kann. Demzufolge wird es ein Benutzer auch unterlassen, gewaltsam zu versuchen, den zweiten Arbeitsbehälter 6 an dem Gerät 1 zu positionieren.

## Patentansprüche

1. Küchenmaschine mit einer Grundeinheit (1), die mindestens zwei getrennte Aufnahmen (2, 3) für jeweils einen Arbeitsbehälter (4, 6) aufweist, wobei in jedem Arbeitsbehälter (4, 6) ein drehendes Arbeitswerkzeug (35, 36) angeordnet ist und die Arbeitsbehälter (4, 6) mit einer der Aufnahme (2, 3) zugeordneten Verriegelungseinrichtung (9, 29) versehen sind,
**dadurch gekennzeichnet,**
daß weiterhin ein Sicherheitsteil (11) vorgesehen ist, das zwischen mindestens zwei Positionen so verstellbar ist, daß in der einen Position die Aufnahme (2) eines ersten Arbeitsbehälters (4) gesperrt ist, während die Aufnahme (3) eines zweiten Arbeitsbehälters (6) freigegeben ist, und daß in der anderen Position die Aufnahme (3) des zweiten Arbeitsbehälters (6) gesperrt ist, während die Aufnahme (2) des ersten Arbeitsbehälters (4) freigegeben ist.

2. Küchenmaschine nach Anspruch 1,
**dadurch gekennzeichnet,**
daß das Sicherheitsteil (11) zu seiner jeweiligen Sperrposition unter Einsetzen eines Arbeitsbehälters (4, 6) in die Aufnahme (2, 3) durch diesen Arbeitsbehälter (4, 6) verstellt wird.

3. Küchenmaschine nach Anspruch 1,
**dadurch gekennzeichnet,**
daß das Sicherheitsteil (11) in den jeweiligen Sperrpositionen in einen Bereich vorsteht, in dem sich der zu sperrende Arbeitsbehälter (4, 6) in seiner benutzungsmäßigen Anordnung befinden würde.

4. Küchenmaschine nach Anspruch 1,
**dadurch gekennzeichnet,**
daß das Sicherheitsteil (11) in der Sperrposition beim Einsetzen des Arbeitsbehälters (4, 6) in Richtung der Achse des Antriebsteils (7, 8) in seine Aufnahme unterhalb des Behälters (4, 6) positioniert ist.

5. Küchenmaschine nach Anspruch 1,
**dadurch gekennzeichnet,**
daß das Sicherheitsteil (11) in der Sperrposition in Halte- und/oder Verriegelungsteile (9) an dem Arbeitsbehälter und/oder der Aufnahme vorsteht und ein Ineinandergreifen dieser Teile verhindert.

6. Küchenmaschine nach Anspruch 2,
**dadurch gekennzeichnet,**
daß das Sicherheitsteil (11) beim benutzungsmäßigen Einsetzen eines Arbeitsbehälters (4, 6) in seine Aufnahme (2, 3) zu der Sperrposition für den anderen Arbeitsbehälter (4, 6) bewegt wird.

7. Küchenmaschine nach Anspruch 1,
**dadurch gekennzeichnet**
daß das Sicherheitsteil (11) linear zwischen den Sperr- und Freigabepositionen verstellbar ist.

8. Küchenmaschine nach Anspruch 7,
**dadurch gekennzeichnet,**
daß das Sicherheitsteil (11) auf einem Steg (12) verschiebbar gehalten ist.

9. Küchenmaschine nach Anspruch 1,
**dadurch gekennzeichnet,**
daß das Sicherheitsteil (11) um eine Achse zwischen den Sperr- und Freigabepositionen drehbar oder schwenkbar gehalten ist.

10. Küchenmaschine nach Anspruch 1,
**dadurch gekennzeichnet,**
daß die Arbeitsbehälter (4, 6) jeweils eine Nockenfläche (22, 24) aufweisen, die in Betriebslage das Sicherheitsteil (11) zu seiner Sperrposition hin verstellen.

11. Küchenmaschine nach Anspruch 10,
**dadurch gekennzeichnet,**
daß die Nockenfläche (22; 24) am Außenumfang des unteren Teils des Arbeitsbehälters (4, 6) angeordnet ist.

12. Küchenmaschine nach Anspruch 1,
**dadurch gekennzeichnet,**
daß das Sicherheitsteil (11) auf der Gehäuseoberseite (10) der Grundeinheit (1) angeordnet ist.

13. Küchenmaschine nach Anspruch 1,
**dadurch gekennzeichnet,**
daß das Sicherheitsteil (11) durch Anschläge in seinem Verschiebeweg begrenzt ist.

## Claims

1. A food processing apparatus with a base unit (1) which has at least two separate mounts (2, 3), each for one processing bowl (4, 6), with one rotary processing tool (35, 36) being arranged in each processing bowl (4, 6) and said processing bowls (4, 6) being provided with a locking device (9, 29) assigned to each of the mounts (2, 3),
**characterized by** the added provision of a safety element (11) which is adjustable between at least two positions in such a way that in the one position the mount (2) of a first processing bowl (4) is rendered unable to accommodate said first bowl while the mount (3) of a second processing bowl (6) is enabled to accommodate said second bowl, and that in the other position the mount (3) of the second processing bowl (6) is rendered unable to accommodate said second bowl while the mount (2) of the first processing bowl (4) is enabled to accommodate said first bowl.

2. The food processing apparatus as claimed in claim 1,
**characterized in that** the safety element (11) is moved into its respective blocking position by either of the processing bowls (4, 6) when either of said bowls (4, 6) is inserted in its mount (2, 3).

3. The food processing apparatus as claimed in claim 1,
**characterized in that** the safety element (11), when in its respective blocking position, projects into an area which the processing bowl (4, 6) to be blocked would normally occupy when in its operating position.

4. The food processing apparatus as claimed in claim 1,
**characterized in that** the safety element (11) in its blocking position is positioned to be beneath the processing bowl (4, 6) when an attempt is made to insert the processing bowl (4, 6) in its mount in the direction of the axis of the drive member (7, 8).

5. The food processing apparatus as claimed in claim 1,
**characterized in that** the safety element (11) in its blocking position extends into holding and/or locking members (9) on the processing bowl and/or on the mount, preventing said members from engaging with each other.

6. The food processing apparatus as claimed in claim 2,
**characterized in that** the safety element (11) is moved into its blocking position for one of the processing bowls (4, 6) when the other of the processing bowls (6, 4) is inserted in its mount (2, 3) for use.

7. The food processing apparatus as claimed in claim 1,
**characterized in that** the safety element (11) is linearly adjustable between the blocking and enabling positions.

8. The food processing apparatus as claimed in claim 7,
**characterized in that** the safety element (11) is slidably mounted on a bar (12).

9. The food processing apparatus as claimed in claim 1,
**characterized in that** the safety element (11) is adapted to rotate or pivot between the blocking and enabling positions about an axis.

10. The food processing apparatus as claimed in claim 1,
**characterized in that** the processing bowls (4, 6) have each a respective cam face (22, 24) which in an operating position moves the safety element (11) into its blocking position.

11. The food processing apparatus as claimed in claim 10,
**characterized in that** the cam face (22; 24) is arranged on the outer circumference of the bottom part of the processing bowl (4, 6).

12. The food processing apparatus as claimed in claim 1,
**characterized in that** the safety element (11) is arranged on the upper side (10) of the base unit (1).

13. The food processing apparatus as claimed in claim 1,
**characterized in that** the length of displacement of the safety element (11) is limited by stops.

## Revendications

1. Appareil ménager comportant une unité de base (1), qui possède au moins deux logements séparés (2,3) pour des récipients de travail respectifs (4,6), et dans lequel un outil de travail rotatif (35,36) est disposé dans chaque récipient de travail (4,6) et les récipients de travail (4,6) comportent un dispositif de verrouillage (9,29) associé au logement (2,3), caractérisé en ce
qu'il est en outre prévu un élément de sécurité (11), qui est réglable dans au moins deux positions de telle sorte que dans une position le logement (2) d'un premier récipient de travail (4) est bloqué, tandis que le logement (3) d'un second récipient de travail (6) est libéré et que dans l'autre position le logement (3) du second récipient de travail (6) est bloqué, tandis que le logement du premier récipient de travail (4) est libéré.

2. Appareil ménager selon la revendication 1,
caractérisé en ce
que lors de la mise en place d'un récipient de travail (4,6) dans le logement (2,3), l'élément de sécurité (11) est déplacé vers sa position de blocage respective par ce récipient de travail.

3. Appareil ménager selon la revendication 1,
caractérisé en ce
que dans les positions respectives de blocage, l'élément de sécurité (11) fait saillie dans une zone, dans laquelle le récipient de travail (4,6) devant être bloqué se situerait dans sa position pour son utilisation.

4. Appareil ménager selon la revendication 1,
caractérisé en ce
que dans la position de blocage, l'élément de sécurité (11) est positionné, lors de l'insertion du récipient de travail (4,6) dans la direction de l'axe de l'élément d'entraînement (7,8), au-dessous du récipient (4,6), dans le logement de ce dernier.

5. Appareil ménager selon la revendication 1,
caractérisé en ce
que dans sa position de blocage, l'élément de sécurité (11) fait saillie dans des parties de retenue et/ou de verrouillage (9) situées sur le récipient de travail et/ou le logement et empêche un emboîtement de ces éléments.

6. Appareil ménager selon la revendication 2,
caractérisé en ce
que lors de la mise en place, pour son utilisation, d'un récipient de travail (4,6) dans son logement (2,3), l'élément de sécurité (11) est amené dans la position de blocage pour l'autre récipient de travail (4,6).

7. Appareil ménager selon la revendication 1,
caractérisé en ce
que l'élément de sécurité (11) est déplaçable linéairement entre les positions de blocage et de libération.

8. Appareil ménager selon la revendication 7,
caractérisé en ce
que l'élément de sécurité (11) est retenu de manière à être déplaçable sur une barrette (12).

9. Appareil ménager selon la revendication 1,
caractérisé en ce
que l'élément de sécurité (11) est retenu de manière à pouvoir tourner ou pivoter autour d'un axe, entre la position de blocage et la position de libération.

10. Appareil ménager selon la revendication 1,
caractérisé en ce
que les récipients de travail (4,6) possèdent des surfaces de cames respectives (22,24), qui dans la position de fonctionnement déplacent l'élément de sécurité (11) en direction de sa position de blocage.

11. Appareil ménager selon la revendication 10,
caractérisé en ce
que la surface de came (22;24) est disposée sur la périphérie extérieure de la partie inférieure du récipient de travail (4,6).

12. Appareil ménager selon la revendication 1,
caractérisé en ce
que l'élément de sécurité (11) est disposé sur la face supérieure (10) de l'unité de base (1).

13. Appareil ménager selon la revendication 1,
caractérisé en ce
que le trajet de déplacement de l'élément de sécurité (11) est limité par des butées.
